# EUROPÄISCHE PATENTSCHRIFT

(11) **EP 4 250 920 B1**
(45) Veröffentlichungstag und Bekanntmachung des Hinweises auf die Patenterteilung: **12.08.2026**
(21) Anmeldenummer: 21782705.4
(22) Anmeldetag: 22.09.2021
(51) Int. Cl.: A01M 21/04, A01M 7/00, A01B 69/00, A01B 79/00, G06T 7/00

(54) **VERFAHREN UND VORRICHTUNG ZUR KLASSIFIZIERUNG VON PFLANZEN SOWIE COMPUTERPROGRAMMPRODUKT**
METHOD AND DEVICE FOR CLASSIFYING PLANTS, AND COMPUTER PROGRAM PRODUCT
PROCÉDÉ ET DISPOSITIF DE CLASSIFICATION DE PLANTES ET PRODUIT DE PROGRAMME INFORMATIQUE

(30) Priorität: 26.11.2020 DE 102020214837
(43) Veröffentlichungstag der Anmeldung: 04.10.2023
(73) Patentinhaber: Robert Bosch GmbH, 70442 Stuttgart (DE)
(72) Erfinder: KHANI, Farid, 70599 Stuttgart (DE); WEIMER, Andreas, 71116 Gaertringen (DE)
(86) Internationale Anmeldenummer: PCT/EP2021/076013
(87) Internationale Veröffentlichungsnummer: WO 2022/111880

(56) Entgegenhaltungen:
- DE-A1- 102017 210 804
- DE-A1- 102018 217 742
- DE-A1- 102018 221 248
- DE-A1- 4 413 739
- US-A- 5 793 035

## Beschreibung

### Technisches Gebiet

Die Erfindung betrifft ein Verfahren und eine Vorrichtung zur Klassifizierung von Pflanzen, um damit insbesondere bei landwirtschaftlichen Anwendungen Nutzpflanzen von Unkraut unterscheiden zu können, sodass in Abhängigkeit der erkannten Pflanzenart gezielt Behandlungen der Pflanzen mit Spritzmittel o.ä. durchführen zu können. Ferner betrifft die Erfindung ein Computerprogrammprodukt als Bestandteil einer derartigen Vorrichtung bzw. zum Durchführen des erfindungsgemäßen Verfahrens.

### Stand der Technik

Ein Verfahren zur Klassifizierung von Pflanzen mit den Merkmalen des Oberbegriffs des Anspruchs 1 ist aus der DE 10 2017 210 804 A1 der Anmelderin bekannt. Bei dem bekannten Verfahren wird mittels einer optischen und/oder Infrarot-Erfassungseinheit eine Auswerteregion im Bereich einer landwirtschaftlichen Nutzfläche erfasst und die erfassten Bilddaten ausgewertet. Ziel ist es, Nutzpflanzen zu erkennen, die in Form von Pflanzreihen gepflanzt worden sind. Nutzpflanzen werden dabei als eine erste Pflanzenart klassifiziert. Die Klassifizierung dient dazu, die Nutzpflanzen von zwischen den Nutzpflanzen bzw. den Pflanzreihen befindlichen Pflanzen unterscheiden zu können, die als zweite Planzenart klassifiziert werden, und bei denen es sich insbesondere um Unkraut handelt, das beispielsweise mittels entsprechender Spritzmittel behandelt werden soll.

### Offenbarung der Erfindung

Das erfindungsgemäße Verfahren zur Klassifizierung von Pflanzen mit den Merkmalen des Anspruchs 1 hat den Vorteil, dass die Rate an nicht klassifizierter zweiter Pflanzenart reduziert wird und somit ein besonders qualitativ hochwertiges Verfahren zur Klassifizierung der Pflanzen bzw. zur Erfassung von Unkraut geschaffen wird. Insbesondere werden häufiger zweite Pflanzenarten, vor allem solche mit relativ großen Pflanzenbestandteilen, wie Blättern, erkannt. Da diese Pflanzen typischerweise mit einem Herbizid behandelt werden, wird dadurch gleichzeitig das Platzangebot für die erste Pflanzenart vergrößert, sobald die zweite Pflanzenart (Unkraut) durch das Herbizid vernichtet worden ist.

Der Erfindung liegt die Idee zugrunde, um einen Kulturbereich, der im Folgenden auch als Kulturreihenschlauch bezeichnet wird, und in dem die erste Pflanzenart in Form einer Pflanzreihe angepflanzt wurde, zwei zusätzliche Bereiche zu legen und auszuwerten. Der erste zusätzliche Bereich, der im Rahmen der Erfindung als Neutralbereich bezeichnet wird, umgibt den Kulturreihenschlauch schlauchförmig. Der Neuralbereich ist wiederum von einem im Rahmen der Erfindung als Fernbereich bezeichneten Bereich schlauchförmig umgeben. Kern der Erfindung ist die Auswertung und Verknüpfung von Daten der Pflanzen bzw. Pflanzenbestandteile im Neutralbereich und im Fernbereich in Verbindung mit dem Kulturreihenschlauch, um in dem Neutralbereich vorhandene Vegitation richtig der ersten oder zweiten Pflanzenart zuordnen zu können.

Konkret schlägt es das erfindungsgemäße Verfahren vor, dass um den Kulturreihenschlauch ein diesen an seinen Längsseiten schlauchförmig umgebender Neutralbereich und um den Neutralbereich an dessen Längsseiten ein den Neutralbereich ebenfalls schlauchförmig umgebender Fernbereich erzeugt wird, dass die Pflanzen oder deren Pflanzenbestandteile, die innerhalb des Neutralbereichs liegen, und die mit innerhalb des Kulturreihenschlauchs angeordneten Pflanzen oder deren Pflanzenbestandteile verbunden sind, als erste Pflanzenart klassifiziert werden, und dass Pflanzen oder deren Pflanzenbestandteile, die sich von dem Kulturreihenschlauch über den Neutralbereich bis in den Fernbereich erstrecken, anhand weiterer Merkmale im Fernbereich analysiert werden, um diese Pflanzen oder deren Pflanzenbestandteile entweder als erste Pflanzenart oder als zweite Pflanzenart zu klassifizieren.

Vorteilhafte Weiterbildungen des erfindungsgemäßen Verfahrens zur Klassifizierung von Pflanzen sind in den Unteransprüchen aufgeführt.

Insbesondere ist es in einer vorteilhaften Ausgestaltung des Verfahrens vorgesehen, dass die weiteren Merkmale eine geometrische Dimension der Pflanzen im Fernbereich, insbesondere die Größe einer von den Pflanzen im Fernbereich überdeckten Fläche und/oder eine Höhe umfassen, und dass die Pflanzen oder deren Pflanzenbestandteile der ersten Pflanzenart zugeordnet werden, wenn die Größe der Fläche und/oder die Höhe der Pflanzen oder deren Pflanzenbestandteile unterhalb eines Grenzwerts liegt.

Um insbesondere sicherzustellen, dass die zweite Pflanzenart bei einer Erkennung als solche sicher mit dem Medium behandelt bzw. durch dieses vernichtet werden kann, ist es vorgesehen, dass alle Pflanzen oder deren Pflanzenbestandteile, die mit in den Fernbereich hineinragenden Pflanzen oder Pflanzenbestandteile verbunden sind, als zweite Pflanzenart klassifiziert werden, wenn die in den Fernbereich hineinragenden Pflanzen oder deren Pflanzenbestandteile als zweite Pflanzenart klassifiziert werden.

Hierzu gehört in einer weiteren Ausgestaltung des Verfahrens darüber hinaus, dass alle Pflanzen oder deren Pflanzenbestandteile, die sich außerhalb des Kulturreihenschlauchs befinden, und die nicht mit dem Kulturreihenschlauch verbunden sind, als zweite Pflanzenart klassifiziert werden.

Zur optimalen Anpassung des Verfahrens an unterschiedliche Gegebenheiten, wie Pflanzen, Jahreszeit usw. ist es darüber hinaus von Vorteil, wenn die Breite des Kulturbereichs und des Neutralbereichs in Abhängigkeit von der ersten Pflanzenart, der Wachstumsgröße und dem Wachstumsstand angepasst wird.

Hinsichtlich der Erfassungseinheit zur Untersuchung von Bilddaten ist es darüber hinaus vorgesehen, dass die Erfassungseinheit vorzugsweise in Längsrichtung des Kulturreihenschlauchs bewegt wird. Die Erfindung ist jedoch auch anwendbar bei einer Bewegungsrichtung der Bilderfassungseinheit, die in einem Winkel bzw. quer zum Kulturreihenschlauch bewegt wird. Dabei ist es insbesondere zur lückenlosen Erfassung aller in dem Kulturreihenschlauch, dem Neutralbereich sowie dem Fernbereich liegenden Pflanzen oder deren Pflanzenbestandteile von Vorteil, wenn Bilddaten von zwei aufeinanderfolgend ausgewerteten Auswerteregionen einander teilweise überlappen.

Die Erfindung umfasst auch eine Vorrichtung, insbesondere als Bestandteil eines landwirtschaftlichen Fahrzeugs, umfassend eine optische und/oder eine Infrarot-Erfassungseinheit und eine Steuereinrichtung sowie eine Auswerteeinheit mit einem Algorithmus, der dazu ausgebildet ist, das soweit beschriebene erfindungsgemäße Verfahern auszuführen.

In Weiterbildung einer derartigen Vorrichtung ist es vorgesehen, dass zusätzlich eine Spritzeinheit mit wenigstens einer selektiv ansteuerbaren Spritzdüse zur Behandlung von Pflanzen oder Pflanzenbestandteilen der zweiten Pflanzenart vorgesehen ist.

Zuletzt umfasst die Erfindung ein Computerprogrammprodukt, insbesondere ein Datenprogramm oder einen Datenträger, die die erfindungsgemäße Vorrrichtung veranlassen, wenigstens einen Verfahrensschritt des erfindungsgemäßen Verfahrens auszuführen.

Weitere Vorteile, Merkmale und Einzelheiten der Erfindung ergeben sich aus der nachfolgenden Beschreibung bevorzugter Ausführungsformen der Erfindung sowie anhand der Zeichnungen.

Kurze Beschreibung der Zeichnungen
- Fig. 1: zeigt in einer vereinfachten Seitenansicht ein landwirtschaftliches Fahrzeug beim Überfahren einer mit Pflanzen bewachsenen landwirtschaftlichen Nutzfläche und
- Fig. 2: und
- Fig. 3: in jeweils vereinfachter Darstellung Bildaufnahmen einer Erfassungseinheit während des Überfahrens der Nutzfläche gemäß der Fig. 1 zur Erläuterung eines Auswerteverfahrens.

### Ausführungsformen der Erfindung

Gleiche Elemente bzw. Elemente mit gleicher Funktion sind in den Figuren mit den gleichen Bezugsziffern versehen.

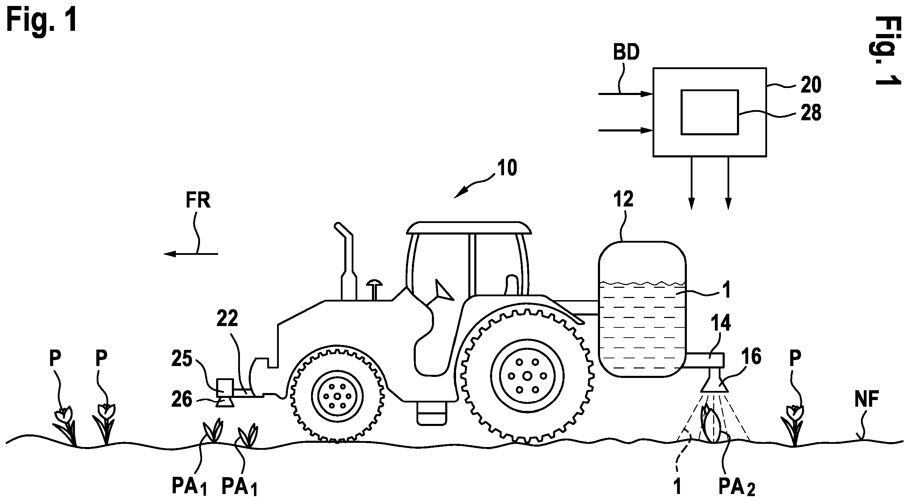

In der Fig. 1 ist ein landwirtschaftliches Fahrzeug 10 in Form eines Traktors o.ä. dargestellt, das in einer Fahrtrichtung FR auf einer Nutzfläche NF entlangfährt. Auf der Nutzfläche NF befinden sich Pflanzen P, die zumindest in zwei Pflanzenarten PA₁ und PA₂ unterschieden werden können. Bei der ersten Pflanzenart PA₁ handelt es sich vorzugsweise um Nutzpflanzen, welche in Form von parallel zueinander angeordneten Pflanzreihen PR auf der Nutzfläche NF ausgesät wurden bzw. dort wachsen. Demgegenüber handelt es sich bei der zweiten Pflanzenart PA₂ insbesondere um Unkraut, das mittels eines Spritzmittels 1 behandelt werden soll. Zur Behandlung der zweiten Pflanzenart PA₂ weist das landwirtschaftliche Fahrzeug 10 einen Vorratstank 12 im Heckbereich auf, der zur Speicherung des Spritzmittels 1 dient. Weiterhin ist am Heckbereich des Fahrzeugs 10 eine Spritzeinheit mit einem Spritzgestell 14 angeordnet, das sich quer zur Fahrtrichtung FR des Fahrzeugs 10 erstreckt, d.h. senkrecht zur Zeichenebene der Fig. 1. In Längsrichtung des Spritzgestells 14 weist dieses, wie an sich bekannt, beispielsweise in gleichmäßigen horizontalen Abständen zueinander angeordnete Spritzdüsen 16 auf, die selektiv von einer fahrzeuginternen Steuereinrichtung 20 angesteuert werden können, um im Sprühbereich der jeweiligen Spritzdüse 16 befindliche Pflanzen P der zweiten Pflanzenart PA₂ mit dem Spritzmittel 1 besprühen zu können. Hierzu sind die Spritzdüsen 16 weiterhin in an sich bekannter Art und Weise über Ventileinrichtungen und Flüssigkeitsleitungen (nicht dargestellt) mit dem Vorratstank 12 verbunden.

Zur Detektion der Pflanzen P bzw. zur Unterscheidung der beiden unterschiedlichen Pflanzenarten PA₁ und PA₂ ist darüber hinaus beispielhaft am Frontbereich des landwirtschaftlichen Fahrzeugs 10 eine an einem Ausleger 22 befestigte Erfassungseinheit 25 vorgesehen.

Die Erfassungseinheit 25 umfasst beispielhaft mehrere gleiche bzw. gleichartige, ebenfalls in gleichmäßigen horizontalen Abständen senkrecht zur Zeichenebene der Fig. 1 angeordnete optische und/oder Infrarot-Aufnahmeeinheiten 26, die beispielhaft jeweils einen bestimmten Teilbereich der von dem landwirtschaftlichen Fahrzeug 10 überfahrenen Nutzfläche NF im Bereich der von den Spritzdüsen 16 behandelbaren Areale erfassen können. Von den Aufnahmeeinheiten 26 werden jeweils beispielsweise in gleichmäßigen Zeitabständen (ggf. geschwindigkeitsabhängig) Bilddaten BD erzeugt, die der Steuereinrichtung 20 als Eingangsgröße zugeführt werden. Die Steuereinrichtung 20, der typischerweise zusätzliche Daten als Eingangsgröße zugeführt werden, weist u.a. eine Auswerteeinrichtung mit einem Algorithmus 28, insbesondere in Form eines Computerprogrammprodukts, auf, der dazu ausgebildet ist, die Bilddaten BD hinsichtlich des Vorkommens der beiden Pflanzenarten PA₁ und PA₂ zu analysieren.

Wie bereits oben erläutert, zeichnen sich die Pflanzen P der ersten Pflanzenart PA₁ dadurch aus, dass diese in Form von Pflanzreihen PR auf der Nutzfläche NF angeordnet sind bzw. wachsen.

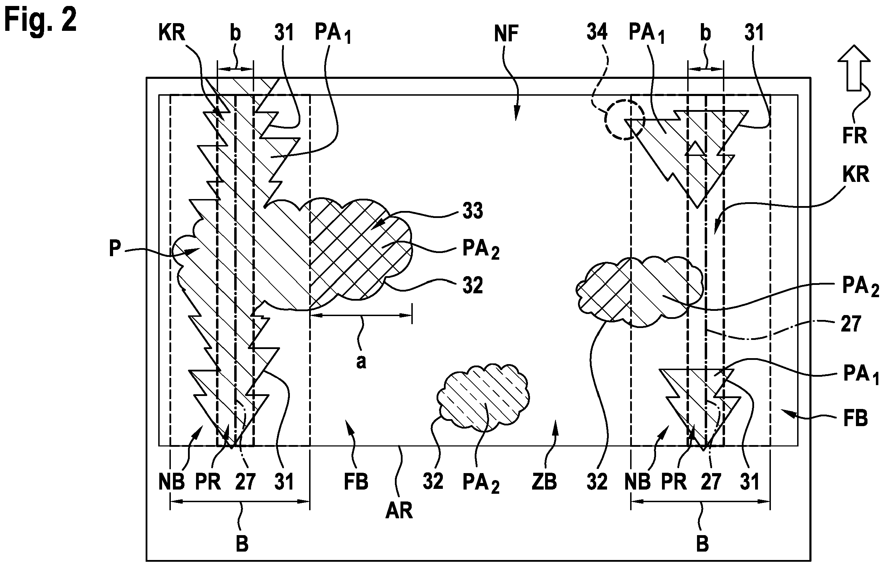

In der Fig. 2 ist dargestellt, dass innerhalb eines aufgenommenen Bildes der Erfassungseinheit 25 bzw. einer oder mehrerer Aufnahmeeinheiten 26 im Bereich einer Auswertregion AR beim Überfahren der Nutzfläche NF zwei Pflanzreihen PR detektiert wurden. Eine Detektion einer Pflanzreihe PR erfolgt durch Erfassung der in den Figuren gestrichelt dargestellten Pflanzenreihenmittelpunktslinien 27. Um die Pflanzenreihenmittelpunktslinien 27 mit den Pflanzreihen PR wird ein Kulturreihenschlauch KR generiert, der eine in der Steuereinrichtung 20 bzw. dem Algorithmus 28 festgelegte Breite b aufweist. Um den Bereich der beiden Kulturreihenschläuche KR ist jeweils ein an die Längsseiten unmittelbar anschließender und den Pflanzbereich PR bzw. den Kulturreihenschlauch KR schlauchförmig umgebender neutraler Bereich NB mit einer (Gesamt-)Breite B (inclusive der Breite b des Kulturreihenschlauchs KR) angeordnet.

Sowohl die Breite b des Kulturreihenschlauchs KR, als auch die Breite B des neutralen Bereichs NB ist in Abhängigkeit von der ersten Pflanzenart PA₁, der Wachstumsgröße (der ersten Pflanzenart PA₁) und dem Wachstumsstand (d.h., dem Zeitpunkt der Wachstumsperiode der ersten Pflanzenart PA₁) angepasst und durch entsprechende Werte in dem Algorithmus 28 der Steuereinrichtung 20 hinterlegt.

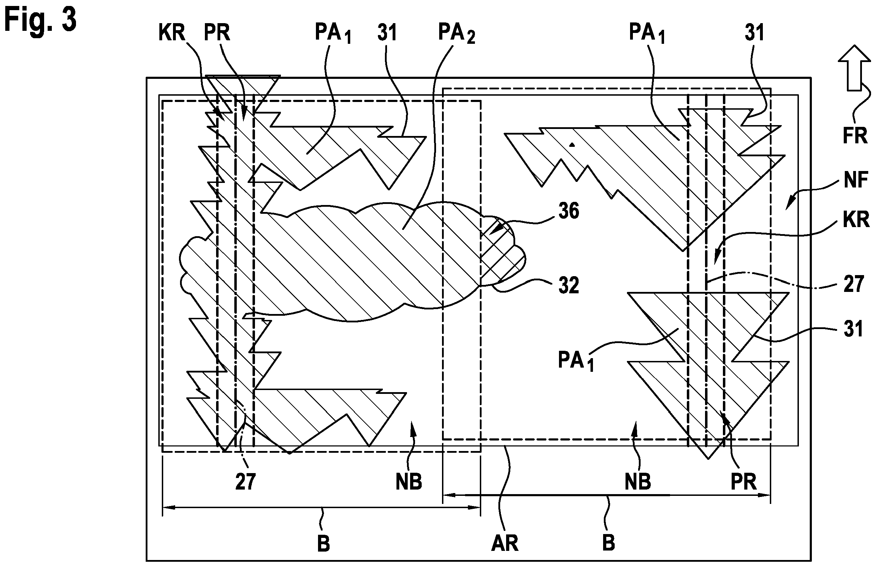

Der neutrale Bereich NB ist wiederum unmittelbar von einem (schlauchförmigen) Fernbereich FB umgeben. Im Falle zweier parallel zueinander angeordneter Pflanzreihenschläuche PR gemäß den Fig. 2 und 3 bilden die beiden Fernbereiche FB auf den einander zugewandten Seiten der beiden Pflanzreihen PR einen gemeinsamen Zwischenbereich ZB aus.

In der Fig. 2 sind der ersten Pflanzenart PA₁ zugeordnete Pflanzen P bzw. Pflanzenbestandteile durch geradlinig bzw. dreiecksförmige Umrisse 31 dargestellt. Demgegenüber sind der zweiten Pflanzenart PA₂ zugeordnete Pflanzen P bzw. Pflanzenbestandteile durch gekrümmt bzw. geschwungen dargestellte Umrisse 32 gekennzeichnet. Die Detektion der Pflanzenart PA₁ bzw. PA₂ erfolgt durch übliche bzw. aus dem Stand der Technik bekannte (Bild-) Auswerteverfahren, die beispielsweise die Form bzw. Umrisse, die Farbe oder sonstige charakteristische Merkmale bezüglich der ersten und zweiten Pflanzenart PA₁ und PA₂ detektieren.

In der Fig. 2 ist beim linken Kulturreihenschlauch KR erkennbar, dass die Pflanzen P bzw. Pflanzenbestandteile vom Kulturreihenschlauch KR in den neutralen Bereich NB hineinreichen und von dort teilweise in den Fernbereich FB. Die in den Fernbereich FB hineinragenden und mit dem Kulturreihenschlauch KR verbundenen Pflanzen P oder Pflanzenbestandteile werden in dem schraffierten Bereich 33 insbesondere hinsichtlich der Fläche des schraffierten Bereichs 33 und/oder der Breite a im Fernbereich FB und/oder der senkrecht zur Ebene der Fig. 2 verlaufenden Höhe und/oder der Schrittlänge zwsichen den einzelnen Pflanzen P bzw. Pflanzenbestandteilen ausgewertet, um auf die erste Pflanzenart PA₁ oder die zweite Pflanzenart PA₂ im Fernbereich FB schließen zu können.

Im dargestellten Ausführungsbereich hat die Auswertung durch die Auswerteeinheit 26 bzw. den Algorithmus 28 ergeben, dass die in den Fernbereich FB hineinragenden Pflanzen P bzw. Pflanzenbestandteile der zweiten Pflanzenart PA₂ zuzuordnen sind. Da diese Pflanzen P bzw. Pflanzenbestandteile darüber hinaus bis in den (linken) Kulturreihenschlauch KR hineinragen, wird sicherheitshalber sowohl der (linke) Kulturreihenschlauch KR, als auch die durch den Umriss 32 gekennzeichneten Bereiche der Pflanzen P im neutralen Bereich NB und im Fernbereich FB mit dem Spritzmittel 1 behandelt.

In dem Zwischenbereich ZB zwischen den beiden Kulturreihenschläuchen KR ist in der Fig. 2 darüber hinaus ein Umriss 32 einer zweiten Pflanzenart PA₂ erkennbar, die isoliert von den beiden neutralen Bereichen NB und den beiden beiden Kulturreihenschläuchen KR angeordnet ist. Der Bereich dieser zweiten Pflanzenart PA₂ wird ebenfalls mit dem Spritzmittel 1 behandelt.

Bezüglich der rechten Pflanzreihe PR in der Fig. 2 ist in einem mittleren Bereich ein Umriss 32 einer zweiten Pflanzenart PA₂ erkennbar, der von dem rechten Kulturreihenschlauch KR über den neutralen Bereichen NB bis in den Fernbereich FB reicht. Auch hier wird zunächst der in dem Fernbereich FB hineinragende Bereich des Umrisses 32 durch den Algorithmus 28 der Steuereinrichtung 20 ausgewertet. Da in diesem Fall die detektierte zweite Pflanzenart PA₂ zwar bis in den Kulturreihenschlauch KR hineinragt, in Längsrichtung des Kulturreihenschlauchs KR jedoch nicht mit anderen Pflanzen P der ersten Pflanzenart PA₁ verbunden ist, wird der gesamte Umriss 32 der zweiten Pflanzenart PA₂ von dem Kulturreihenschlauch KR über den neutralen Bereich NB bis in den Fernbereich FB mit dem Spritzmittel 1 behandelt.

Weiterhin ist im oberen Bereich der Fig. 2 durch den Kreis 34 ein weiterer Bereich gekennzeichnet, bei dem eine aus dem Kulturreihenschlauch KR über den neutralen Bereich NB bis in den Fernbereich FB hineinragende Pflanzen P detektiert wurde. Hier wird insbesondere der Bereich des Kreises 34 durch geeignete Auswerteverfahren erfasst, um daraus schließen zu können, ob es sich wie dargestellt um die erste Pflanzenart PA₁, die nicht mit dem Spritzmittel 1 behandelt wird, oder um die zweite Pflanzenart PA₂ handelt.

In der Fig. 3 ist dargestellt, dass die beiden Kulturreihenschläuche KR keinen Fernbereich FB aufweisen, da die Breite B der beiden neutralen Bereiche NB so groß ist, dass dieser jeweils bis in den neutralen Bereich NB des anderen, danebenliegenden Kulturreihenschlauchs KR reicht, d.h., dass sich die beiden neutralen Bereiche NB überschneiden bzw. überlappen. In diesem Fall wird der Bereich, der außerhalb des jeweiligen neutralen Bereichs NB des Kulturreihenschlauchs KR liegt, als Fernbereich FB betrachtet, obwohl dieser gleichzeitig den Neuralbereich NB des danebenliegenden Kulturreihenschlauchs KR ausbildet.

Dies ist insbesondere an dem schraffierten Bereich 36 des in der Fig. 3 linken Kulturreihenschlauchs KR erkennbar, der über den neutralen Bereich NB des linken Kulturreihenschlauchs KR bis in den Neutralbereich NB des rechten Kulturreihenschlauchs KR hineinreicht und der als zweite Pflanzenart PA₂ detektiert wurde. Demgegenüber ist bei dem rechten Kulturreihenschlauch KR in der Fig. 3 erkennbar, dass alle Pflanzen P, die innerhalb des Kulturreihenschlauchs KR und seinem zugeordneten neutralen Bereich NB liegen, als der ersten Pflanzenart PA₁ zugeordnet indentifiziert wurden.

## Patentansprüche

1. Verfahren zur Klassifizierung von Pflanzen (P), bei dem die Pflanzen (P) oder deren Pflanzenbestandteile, insbesondere Pflanzenblätter, mittels einer optischen und/oder Infrarot-Erfassungseinheit (25) in Auswerteregion (AR) detektiert und die erfassten Bilddaten (BD) der Erfassungseinheit (25) mittels eines Algorithmus (28) ausgewertet werden, wobei mittels der Auswertung eine erste Pflanzenart (PA₁) von einer zweiten Pflanzenart (PA₂) unterschieden wird, wobei die zweite Pflanzenart (PA₂) insbesondere mit einem Medium, vorzugsweise einem flüssigen Spritzmittel (1), behandelt wird, und wobei die erste Pflanzenart (PA₁) in einem schlauchförmigen Kulturreihenschlauch (KR) in Form einer Pflanzreihe (PR) angepflanzt sind,
**dadurch gekennzeichnet,**
**dass** um den Kulturreihenschlauch (KR) ein diesen an seinen Längsseiten schlauchförmig umgebender Neutralbereich (NB) und um den Neutralbereich (NB) an dessen Längsseiten ein den Neutralbereich (NB) ebenfalls schlauchförmig umgebender Fernbereich (FB) erzeugt wird, dass die Pflanzen (P) oder deren Pflanzenbestandteile, die innerhalb des Neutralbereichs (NB) liegen, und die mit innerhalb des Kulturreihenschlauchs (KR) angeordneten Pflanzen (P) oder deren Pflanzenbestandteile verbunden sind, als erste Pflanzenart (PA₁) klassifiziert werden, und dass Pflanzen (P) oder deren Pflanzenbestandteile, die sich von dem Kulturreihenschlauch (KR) über den Neutralbereich (NB) bis in den Fernbereich (FB) erstrecken, anhand weiterer Merkmale im Fernbereich (FB) analysiert werden, um diese Pflanzen (P) oder deren Pflanzenbestandteile entweder als erste Pflanzenart (PA₁) oder als zweite Pflanzenart (PA₂) zu klassifizieren.

2. Verfahren nach Anspruch 1,
**dadurch gekennzeichnet,**
**dass** die weiteren Merkmale eine geometrische Dimension der Pflanzen (P) im Fernbereich (FB), insbesondere die Größe einer von den Pflanzen (P) im Fernbereich (FB) überdeckten Fläche und/oder eine Höhe umfassen, und dass die Pflanzen (P) oder deren Pflanzenbestandteile der ersten Pflanzenart (PA₁) zugeordnet werden, wenn die Größe der Fläche und/oder die Höhe der Pflanzen (P) oder deren Pflanzenbestandteile unterhalb eines Grenzwerts liegt.

3. Verfahren nach Anspruch 1 oder 2,
**dadurch gekennzeichnet,**
**dass** alle Pflanzen (P) oder deren Pflanzenbestandteile, die mit in den Fernbereich (FB) hineinragenden Pflanzen (P) oder Pflanzenbestandteile verbunden sind, als zweite Pflanzenart (PA₂) klassifiziert werden, wenn die in den Fernbereich (FB) hineinragenden Pflanzen (P) oder deren Pflanzenbestandteile als zweite Pflanzenart (PA₂) klassifiziert werden.

4. Verfahren nach einem der Ansprüche 1 bis 3,
**dadurch gekennzeichnet,**
**dass** alle Pflanzen (P) oder deren Pflanzenbestandteile, die sich außerhalb des Kulturreihenschlauchs (KR) befinden, und die nicht mit dem Kulturreihenschlauch (KR) verbunden sind, als zweite Pflanzenart (PA₂) klassifiziert werden.

5. Verfahren nach einem der Ansprüche 1 bis 4,
**dadurch gekennzeichnet,**
**dass** die Breite (b) des Kulturreihenschlauchs (KR) und die Breite (B) des Neutralbereichs (NB) in Abhängigkeit von der ersten Pflanzenart (PA₁), der Wachstumsgröße und dem Wachstumsstand angepasst werden.

6. Verfahren nach einem der Ansprüche 1 bis 5,
**dadurch gekennzeichnet,**
**dass** die Erfassungseinheit (25) in Längsrichtung des Kulturreihenschlauchs (KR) bewegt wird.

7. Verfahren nach einem der Ansprüche 1 bis 6,
**dadurch gekennzeichnet,**
**dass** Bilddaten (BD) von zwei aufeinanderfolgend ausgewerteten Auswerteregionen (AR) einander teilweise überlappen.

8. Vorrichtung, insbesondere als Bestandteil eines landwirtschaftlichen Fahrzeugs (10), umfassend eine optische und/oder Infrarot-Erfassungseinheit (25) und eine Steuereinrichtung (20) und eine Auswerteeinheit mit einem Algorithmus (28), der dazu ausgebildet ist, ein Verfahren nach einem der Ansprüche 1 bis 7 auszuführen.

9. Vorrichtung nach Anspruch 8,
**dadurch gekennzeichnet,**
**dass** zusätzlich eine Spritzeinheit (14) mit wenigstens einer selektiv ansteuerbaren Spritzdüse (16) zur Behandlung von Pflanzen (P) oder Pflanzenbestandteilen der zweiten Pflanzenart (PA₂) vorgesehen ist.

10. Computerprogrammprodukt, insbesondere Datenprogramm oder Datenträger, umfassend Befehle, die bewirken, dass die Vorrichtung des Anspruchs 8 oder 9 wenigstens einen Verfahrensschritt nach einem der Ansprüche 1 bis 7 ausführt.

## Claims

1. Method for classifying plants (P), in which the plants (P) or plant parts thereof, in particular plant leaves, are detected by means of an optical and/or infrared capture unit (25) within an evaluation region (AR) and the captured image data (BD) from the capture unit (25) are evaluated by means of an algorithm (28), wherein the evaluation makes it possible to distinguish a first plant type (PA₁) from a second plant type (PA₂), wherein the second plant type (PA₂) is treated in particular with a medium, preferably with a liquid spray (1), and wherein the first plant type (PA₁) is planted in the form of a plant row (PR) in a tubular cultivation row tube (KR),
**characterized in that**
a neutral area (NB) that encloses the cultivation row tube (KR) in a shape of a tube at its longitudinal sides is generated around said cultivation row tube, and a remote area (FB) that encloses the neutral area (NB) also in the shape of a tube at its longitudinal sides is generated around the neutral area (NB), **in that** the plants (P) or plant parts thereof that are situated within the neutral area (NB) and that are associated with plants (P) or plant parts thereof situated within the cultivation row tube (KR) are classified as the first plant type (PA₁), and **in that** plants (P) or plant parts thereof that extend from the cultivation row tube (KR), across the neutral area (NB), and into the remote area (FB) are analysed based on further features in the remote area (FB) in order to classify said plants (P) or plant parts thereof either as the first plant type (PA₁) or as the second plant type (PA₂).

2. Method according to Claim 1,
**characterized in that**
the further features include a geometric dimension of the plants (P) in the remote area (FB), in particular the size of a surface area covered by the plants (P) in the remote area (FB), and/or a height, and **in that** the plants (P) or plant parts thereof are assigned to the first plant type (PA₁) when the size of the surface area and/or the height of the plants (P) or plant parts thereof is below a limit value.

3. Method according to Claim 1 or 2,
**characterized in that**
all plants (P) or plant parts thereof that are associated with plants (P) or plant parts that extend into the remote area (FB) are classified as the second plant type (PA₂) when the plants (P) or plant parts thereof that extend into the remote area (FB) are classified as the second plant type (PA₂) .

4. Method according to one of Claims 1 to 3,
**characterized in that**
all plants (P) or plant parts thereof that are situated outside the cultivation row tube (KR) and that are not associated with the cultivation row tube (KR) are classified as the second plant type (PA₂) .

5. Method according to one of Claims 1 to 4,
**characterized in that**
the width (b) of the cultivation row tube (KR) and the width (B) of the neutral area (NB) are adjusted depending on the first plant type (PA₁), the growth size and the growth stage.

6. Method according to one of Claims 1 to 5,
**characterized in that**
the capture unit (25) is moved in the longitudinal direction of the cultivation row tube (KR).

7. Method according to one of Claims 1 to 6,
**characterized in that**
image data (BD) from two consecutively evaluated evaluation regions (AR) partially overlap.

8. Device, in particular as an integral part of an agricultural vehicle (10), comprising an optical and/or infrared capture unit (25) and a controller (20), as well as an evaluation unit having an algorithm (28) designed to carry out a method according to one of Claims 1 to 7.

9. Device according to Claim 8,
**characterized in that**
provision is additionally made for a spraying unit (14) having at least one selectively actuatable spray nozzle (16) for treating plants (P) or plant parts of the second plant type (PA₂).

10. Computer program product, in particular data program or data medium, comprising instructions that cause the device of Claim 8 or 9 to carry out at least one method step according to one of Claims 1 to 7.

## Revendications

1. Procédé de classification de plantes (P), avec lequel les plantes (P) ou leurs composants végétaux, en particulier leurs feuilles, sont détectés dans la région d'évaluation (AR) au moyen d'une unité de capture (25) optique et/ou infrarouge et les données d'image (BD) capturées de l'unité de capture (25) sont évaluées au moyen d'un algorithme (28), une première espèce végétale (PA₁) se distinguant d'une deuxième espèce végétale (PA₂) au moyen de l'évaluation, la deuxième espèce végétale (PA₂) étant notamment traitée avec un fluide, de préférence un produit de pulvérisation liquide (1), et la première espèce végétale (PA₁) étant plantée dans un tuyau à rang de culture (KR) tubulaire sous la forme d'un rang de plantes (PR),
**caractérisé en ce**
**qu'**autour du tuyau à rang de culture (KR) est formée une zone neutre (NB) qui entoure celui-ci de manière tubulaire sur ses côtés longitudinaux, et autour de la zone neutre (NB) une zone distante (FB) qui entoure celle-ci également de manière tubulaire sur ses côtés longitudinaux, **en ce que** les plantes (P) ou leurs composants végétaux qui se trouvent dans la zone neutre (NB) et qui sont reliés à des plantes (P) ou à leurs composants végétaux disposés à l'intérieur du tuyau à rang de culture (KR) sont classés comme première espèce végétale (PA₁), et **en ce que** les plantes (P) ou leurs composants végétaux qui s'étendent du tuyau à rang de culture (KR) jusque dans la zone distante (FB) en passant par la zone neutre (NB) sont analysés à l'aide de caractéristiques supplémentaires dans la zone distante (FB) afin de classifier ces plantes (P) ou leurs composants végétaux soit comme première espèce végétale (PA₁), soit comme deuxième espèce végétale (PA₂).

2. Procédé selon la revendication 1,
**caractérisé en ce**
**que** les caractéristiques supplémentaires comprennent une dimension géométrique des plantes (P) dans la zone distante (FB), en particulier la taille d'une surface recouverte par les plantes (P) dans la zone distante (FB) et/ou une hauteur, et **en ce que** les plantes (P) ou leurs composants végétaux sont affectés à la première espèce végétale (PA₁) lorsque la taille de la surface et/ou la hauteur des plantes (P) ou de leurs composants végétaux est inférieure à une valeur limite.

3. Procédé selon la revendication 1 ou 2,
**caractérisé en ce**
**que** toutes les plantes (P) ou leurs composants végétaux qui sont reliés à des plantes (P) ou à des composants végétaux faisant saillie dans la zone distante (FB) sont classifiés comme deuxième espèce végétale (PA₂) lorsque les plantes (P) ou leurs composants végétaux qui font saillie dans la zone distante (FB) sont classifiés comme deuxième espèce végétale (PA₂).

4. Procédé selon l'une des revendications 1 à 3,
**caractérisé en ce**
**que** toutes les plantes (P) ou leurs composants végétaux qui se trouvent à l'extérieur du tuyau à rang de culture (KR) et qui ne sont pas reliés au tuyau à rang de culture (KR) sont classifiés comme deuxième espèce végétale (PA₂).

5. Procédé selon l'une des revendications 1 à 4,
**caractérisé en ce**
**que** la largeur (b) du tuyau à rang de culture (KR) et la largeur (B) de la zone neutre (NB) sont adaptées en fonction de la première espèce végétale (PA₁), de la taille de croissance et du stade de croissance.

6. Procédé selon l'une des revendications 1 à 5,
**caractérisé en ce**
**que** l'unité de capture (25) est déplacée dans le sens longitudinal du tuyau à rang de culture (KR).

7. Procédé selon l'une des revendications 1 à 6,
**caractérisé en ce**
**que** les données d'image (BD) de deux régions d'évaluation (AR) évaluées successivement se chevauchent partiellement.

8. Dispositif, en particulier faisant partie d'un véhicule agricole (10), comprenant une unité de capture (25) optique et/ou infrarouge et un appareil de commande (20) ainsi qu'une unité d'évaluation dotée d'un algorithme (28), qui est configuré pour mettre en œuvre un procédé selon l'une des revendications 1 à 7.

9. Dispositif selon la revendication 8,
**caractérisé en ce**
**qu'**en plus une unité de pulvérisation (14) pourvue d'au moins une buse de pulvérisation (16) pouvant être commandée de manière sélective est prévue pour le traitement de plantes (P) ou de composants végétaux de la deuxième espèce végétale (PA₂).

10. Produit de programme informatique, notamment programme de données ou support de données, comprenant des instructions qui ont pour effet que le dispositif selon la revendication 8 ou 9 exécute au moins une étape du procédé selon l'une des revendications 1 à 7.
